# EUROPÄISCHE PATENTSCHRIFT

(11) **EP 3 170 702 B1**
(45) Veröffentlichungstag und Bekanntmachung des Hinweises auf die Patenterteilung: **29.08.2018**
(21) Anmeldenummer: 16199623.6
(22) Anmeldetag: 18.11.2016
(51) Int. Cl.: B60R 19/14, B60R 19/04, B60R 19/32, B60R 19/38

(54) **ADAPTIVE STOSSFÄNGERANORDNUNG**
ADAPTIVE BUMPER ASSEMBLY
SYSTÈME DE PARE-CHOCS ADAPTATIF

(30) Priorität: 18.11.2015 DE 102015120013
(43) Veröffentlichungstag der Anmeldung: 24.05.2017
(73) Patentinhaber: Valmet Automotive Holding GmbH & Co. KG, 80939 München (DE); Stolfig, Felicia, 85290 Geisenfeld (DE)
(72) Erfinder: Stolfig, Felicia, 85290 Geisenfeld (DE); Rudzewski, Stephen, 85053 Ingolstadt (DE)
(74) Vertreter: Müller, Jochen

(56) Entgegenhaltungen:
- EP-A1- 2 727 774
- DE-A1-102010 031 089
- DE-U1-202014 103 165
- US-A- 1 315 676

## Beschreibung

Die Erfindung bezieht sich auf eine adaptive Stoßfängeranordnung mit einem Stoßfänger, der jeweils endseitig in einer Haupterstreckungsrichtung ein mit einer zugeordneten Betätigungseinrichtung teleskopierbares Verlängerungselement umfasst und einen Vorderwagen mit einer Stoßfängeranordnung.

Die US 2 737 255 A offenbart einen Vorderwagen mit einer Fahrzeugstoßstange und einer zugeordneten Befestigungsvorrichtung, die die Fahrzeugstoßstange mit der Fahrzeugkarosserie mit Hilfe eines Schwenkelements bodenparallel schwenkbar verbindet. Bei einer außermittigen Kraftbeaufschlagung verschwenkt die Fahrzeugstoßstange in die der Kraftbeaufschlagungsseite entsprechende Richtung und greift über ein zugeordnetes Hebelgestänge an einer Fahrzeuglenkung an, um Vorderräder des Fahrzeugs gegenüber einer Fahrzeuglängsachse schräg zu stellen. In einem Frontalaufprallszenarium von typischerweise 40-120ms Dauer können jedoch die eingeschlagenen Vorderräder das Fahrzeug nicht nennenswert von der Aufprallseite weglenken. Weiterhin nimmt diese Lösung während des Schrägstellens der Fahrzeugstoßstange keine nennenswerte Aufprallenergie auf und verschenkt somit wertvolle Verzögerungszeit.

Aus der EP 2 727 774 A1 ist ein Vorderwagen eines Fahrzeuges mit einer Stoßstange bekannt, aus der in einem Crashfall beidseits Stoßstangenverlängerungselemente ausfahren. Die teleskopierbaren Stoßstangenverlängerungselemente werden aufgrund des Signals eines Crash-Sensors, also eines Unfall-Sensors, der mit einem Aktuator verbunden ist, ausgefahren. Aufgrund der notwendigen elektronischen Signalverarbeitung kann die Ausfahrung der Stoßstangenverlängerungselemente aus der Stoßstange nicht schneller als 10ms nach einem Aufprallbeginn erfolgen. Daher eignet sich dieses System in erster Linie für Precrash-Schutzsysteme, die einen Unfall noch vor dem eigentlichen Aufprall erkennen und das System frühzeitig aktivieren bzw. ausfahren.

Ein Stoßfängersystem für ein Fahrzeug ist derart konzipiert, dass es bei den möglichen Lastfällen die dabei auftretenden, unterschiedlich hohen, Energien absorbieren kann. Um diese Anforderungen zu erfüllen, werden bei Personenkraftwagen für verschieden hohe Energieniveaus ausgelegte Deformationselemente hintereinander angeordnet. So sind die Stoßfängersysteme für die Fahrzeugfront mit einem möglichst an der Außenkontur angeordneten Deformationselement für den Fußgängerschutz ausgerüstet. Daran schließt sich üblicherweise ein als Typschadenelement bezeichnetes Deformationselement an, das bewirkt, dass bei einem Aufprall mit einer relativ geringen Krafteinwirkung nicht die vorderen Längsträger oder sonstige teure Strukturbauteile der Fahrzeugkarosserie beschädigt werden. Als drittes Deformationselement dienen die vorderen Längsträger, die derart ausgebildet sind, dass sie sich bei höheren Aufprallgeschwindigkeiten energieumwandelnd verformen.

Darüber hinaus ist aus der nicht vorveröffentlichten WO 2015/172 757 A1 ein Vorderwagen bekannt, der eine nach dem Balkenwaagenprinzip, wippenartig mittig aufgehängte Stoßfängeranordnung umfasst, die bei einem so genannten offset-crash, also einem Aufprall auf ein Hindernis mit nur einer Fahrzeugfrontseite, um eine insbesondere senkrechte Drehachse mit ihrem aufprallseitigen Arm nach hinten in Richtung des Fahrzeugs verschwenkt und mit dem auf der gegenüberliegenden Seite der Drehachse angeordneten Arm nach vorne vom Fahrzeug weg schwenkt. Hierdurch entsteht ein nicht unerheblicher Schaden auf der von der Aufprallseite abgewandten Seite des Fahrzeuges, da der Vorderwagenaufbau auch dort stark deformiert wird. Der Balkenwaageneffekt zieht somit auch auf der aufprallabgewandten Seite einen nicht unerheblichen Reparaturaufwand nach sich. Im Weiteren sind sowohl die Kosten als auch das Gewicht für die Aufhängung des Stoßfängerquerträgers mit mittiger Drehachse im mittleren Bereich des Vorderwagens relativ hoch, wobei der zur wippenartigen, balkenwaagenartigen Lagerung des Stoßfängerquerträgers geeignete Vorderwagen im Vergleich mit einem mit konventionellem Stoßfänger ausgestatteten Vorderwagen aufwändiger gestaltet ist. Im Weiteren ist eine Stoßfängeranordnung offenbart, die einen Stoßfängerquerträger umfasst, dem jeweils endseitig in einer Haupterstreckungsrichtung ein teleskopierbares Verlängerungselement zugeordnet ist, das bei einer Verlagerung des Stoßfängerquerträgers mittels einer Betätigungseinrichtung stirnseitig ausfahrbar ist.

Der Erfindung liegt die Aufgabe zugrunde, eine Stoßfängeranordnung und einen Vorderwagen der eingangs genannten Art zu schaffen, die bzw. der bei einem Aufprall in einer relativ kurzen Reaktionszeit einen hohen Schutz bei gleichzeitig verhältnismäßig geringer Beschädigung bietet und darüber hinaus kostengünstiger im Aufbau, sowie an eine vorhandene Fahrzeugstruktur adaptierbar ist.

Erfindungsgemäß wird die Aufgabe durch die Merkmale des unabhängigen Anspruchs gelöst.

Die Unteransprüche stellen vorteilhafte Ausgestaltungen der Erfindung dar.

Eine Stoßfängeranordnung umfasst einen durch mindestens ein Gelenk in Stoßfängerabschnitte unterteilten Stoßfängerquerträger, der jeweils endseitig in einer Haupterstreckungsrichtung ein mit einer zugeordneten Betätigungseinrichtung teleskopierbares Verlängerungselement umfasst, wobei die Betätigungseinrichtung einen mittels des Stoßfängerquerträgers ortsveränderlich gelagerten Betätiger umfasst, der bei einer Verlagerung mit einem Aktor der Betätigungseinrichtung zum stirnseitigen Ausfahren des Verlängerungselements zusammenwirkt.

Die Stoßfängeranordnung stellt insbesondere bei einem offset-crash sicher, dass eine beim Auftreffen auf ein Hindernis eingeleitete Kraft nicht vollständig in eine das Fahrzeug beschädigende Verformung umgewandelt, sondern unter einer Minimierung des Schadens abgeleitet wird. Hierbei dreht sich nicht, wie aus dem oben genannten Stand der Technik bekannt, der gesamte Stoßfängerquerträger um seine Mitte, sondern der kraftbeaufschlagte Stoßfängerabschnitt knickt im Bereich des beispielsweise in etwa in der Mitte des Stoßfängerquerträgers angeordneten Gelenks definiert ab. Selbstverständlich ist es möglich, mehrere Gelenke in dem Verlauf der Stoßstange entlang deren Haupterstreckungsrichtung verteilt anzuordnen, um somit mehrere Stoßfängerabschnitte zu bilden. Das Gelenk ist derart ausgebildet, dass verhältnismäßig hohe Zug- /Druckkräfte in Fahrzeugquerrichtung übertragen werden können und bevorzugt eine Schwenkbewegung in lediglich eine Richtung zugelassen wird

Die Stoßfängerabschnitte sind durch die, beispielsweise durch einen frontseitigen Aufprall verursachte Krafteinwirkung bodenparallel schwenkbar und bilden einen stumpfen Winkel zu einander.

Da ein moderner Stoßfängerquerträger üblicherweise deutlich schmaler als die PKW-Fahrzeugbreite ist, und diese Länge des Stoßfängerquerträgers in der Regel nicht ausreicht, dass sich der Stoßfängerquerträger zur Aufnahme von bei einem Crash einwirkenden Kräften an einem Vorderrad abstützt, ist an beiden Enden des Stoßfängerquerträgers jeweils ein Verlängerungselement vorgesehen, das innerhalb des Stoßfängerquerträgers teleskopierbar gelagert ist, sich also in der Haupterstreckungsrichtung des Stoßfängerquerträgers, die im montierten Zustand über die Breite des Fahrzeugs verläuft, stirnseitig aus dem Stoßfängerquerträger ausfahren lässt. Das Verlängerungselement ist vorzugsweise derart gestaltet, dass es gemeinsam mit dem Stoßfängerquerträger und dem zugeordneten Vorderrad des Fahrzeugs eine Abgleitebene bildet. Damit das Verlängerungselement innerhalb einer relativ kurzen Reaktionszeit, die in der Regel unter 10 ms liegen sollte, aufgrund der Verlagerung des belasteten Stoßfängerabschnitts aus dem Stoßfängerquerträger herausgefahren werden kann, ist der dem Stoßfängerabschnitt zugeordnete Betätiger unmittelbar mit dem Aktor der Betätigungseinrichtung zum stirnseitigen Verschieben des Verlängerungselements gekoppelt. Diese Verbindung kann beispielsweise über ein Gestänge, eine Seilzuganordnung, oder eine Art kommunizierendes Röhren-System realisiert werden. Umfangreiche Versuche haben gezeigt, dass eine sensorgestützte Erfassung der Kraftbeaufschlagung, eine anschließende rechnergesteuerte Auswertung der Sensordaten und eine Ansteuerung eines Aktors zum stirnseitigen Ausfahren eines Verlängerungselements den Anforderungen an die schnelle Reaktionszeit, die erfindungsgemäß durch eine unmittelbare mechanische Kopplung zu realisieren ist, nicht verwirklicht werden kann.

Die Stoßfängeranordnung nach der Erfindung weist gegenüber dem Stand der Technik einen deutlich einfacheren und kostengünstigeren Aufbau bei einem geringeren Gewicht auf, so das auch die Möglichkeit besteht, die Stoßfängeranordnung an ein bestehendes Vorderwagen Konzept mit beispielsweise zwei klassischen Falten-Beul-Längsträgern zu adaptieren.

In Ausgestaltung sind die Stoßfängerabschnitte bei einer auf eine Vorderseite einwirkenden Kraftbeaufschlagung derart relativ zueinander verschwenkbar, dass zwei benachbarte Stoßfängerabschnitte rückseitig einen stumpfen Winkel zwischen sich einschließen oder eine Gerade oder einen konvexen Bogen bilden. Bei einem so genannten offset-crash, bei dem die Kraftbeaufschlagung des Stoßfängerquerträgers außerhalb dessen Mitte stattfindet, wird der eine Stoßfängerabschnitt gegenüber dem benachbarten Stoßfängerabschnitt verschwenkt, wobei der verschwenkte Stoßfängerabschnitt den zugeordneten Betätiger beaufschlagt, um das stirnseitige Ausfahren des Verlängerungselements aus dem verschwenkten Stoßfängerabschnitt zu bewirken. Erfolgt die Kraftbeaufschlagung im Wesentlichen in der Mitte des Stoßfängerquerträgers oder in einem das Gelenk übergreifenden Abschnitt, so dass ein Verschwenken von belasteten Stoßfängerabschnitten nicht möglich ist, erfolgt eine Verformung innerhalb des Stoßfängerquerträgers zur Bildung einer Geraden oder eine mittige Kraftbeaufschlagung erfolgt unter einer Beibehaltung der Geometrie des gekrümmten Stoßfängerquerträgers im Wesentlichen, wobei die Stoßfängerabschnitte nicht wesentlich verschwenken. Der gesamte Stoßfängerquerträger wird in Kraftbeaufschlagungsrichtung in Richtung des Fahrzeugs verlagert und beaufschlagt die zugeordneten Betätiger, so dass an beiden Stirnseiten des Stoßfängerquerträgers Verlängerungselemente ausfahren, die sich dann auf den Vorderkanten der zugeordneten Vorderräder abstützen.

Nach einer Weiterbildung ist das Gelenk als ein Scharniergelenk oder ein bei einer Kraftbeaufschlagung kollabierbarer Abschnitt zwischen zwei benachbarten Stoßfängerabschnitten ausgebildet. Das Gelenk ist durch entsprechende konstruktive Maßnahmen derart gestaltet, dass eine Schwenkbewegung der damit verbundenen Stoßfängerabschnitte nur in eine Richtung stattfindet, beispielsweise durch die Anordnung von sich auf den benachbarten Stoßfängerabschnitten abstützenden Sperrriegeln, die ein Verschwenken der durch das Gelenk gekoppelten Stoßfängerabschnitte vom Fahrzeug weg verhindern. Bei dem Gelenk muss es sich nicht um ein Scharnier- oder Drehgelenk handeln, vielmehr ist auch die Anordnung von Abschnitten zwischen den Stoßfängerabschnitten möglich, die aufgrund ihrer Querschnittgestaltung und Materialwahl ein gelenkiges Verhalten bei einer entsprechenden Kraftbeaufschlagung aufweisen. Ein solcher Abschnitt lässt sich beispielsweise aus einem hoch manganhaltigen Stahl mit Aluminium- und Silizium-Zugabe und einem austenitischen, nicht ferromagnetischen Gefüge herstellen, der eine hohe Festigkeit bei gleichzeitig hoher Dehnung aufweist und in einem Bandgießverfahren gefertigt ist. Ein derartiger Werkstoff wird beispielsweise unter dem Markennamen HSD-Stahl von der Salzgitter Flachstahl GmbH, Salzgitter, Deutschland, hergestellt und vertrieben. Ein solcher Abschnitt knickt oberhalb einer definierten Kraft bzw. eines definierten Biegemomentes ein und bildet lokal ein elastisch/plastisches Gelenk, um das der daran angebundene weitgehend intakte Stoßfängerabschnitt schwenkt, in erster Linie um die gebildete Hochachse, senkrecht zur Haupterstreckungsrichtung, also in einer an einem Vorderwagen montierten Lage im Wesentlichen bodenparallel.

Zweckmäßigerweise ist der Betätiger über Verbindungsmittel mit dem Aktor gekoppelt, wobei das Verbindungsmittel ein derart druckfestes oder zugfestes Medium umfasst, dass mit der Verlagerung des Betätigers eine Beaufschlagung des Aktors einhergeht. Bevorzugt ist der Betätiger einer Kolben-Zylinder-Anordnung zugeordnet, die Verbindungsmittel sind als eine flüssigkeitsgefüllte Hydraulikverbindung und der Aktor als ein hydraulisch betätigter Antrieb ausgebildet, wobei die Kolben-Zylinder-Anordnung ab einer bestimmten Kraft derart auslöst, dass der Kolben relativ zu dem Zylinder verschiebbar ist. Der kolbenartige Betätiger bzw. der dem Betätiger zugeordnete Kolben der Kolben-Zylinder-Anordnung hat eine definierte Losbrechkraft, z.B. in Form eines Schneidelementes, Brechbolzens oder dergleichen. Erst oberhalb dieser Losbrechkraft setzt sich der Betätiger überhaupt in Relativbewegung zu dem Zylinder. Somit benötigt das System keine insbesondere elektronischen Sensoren bzw. Steuergeräte und eine Fehlbetätigung ist ausgeschlossen.

Vorzugsweise ist die Kolben-Zylinder-Anordnung in ein Deformationselement, beispielsweise ein so genanntes Typschadenelement, integriert, die zwischen dem Stoßfängerquerträger und fahrzeugseitigen Strukturträgern anordenbar ist. Durch die Kopplung über die Hydraulikverbindung, beispielsweise einen druckfesten Hydraulikschlauch ist im Fall eines Unfalls die Beschädigungsgefahr minimiert. Die direkte Kopplung des Betätigers, der Bestandteil der Kolben-Zylinder-Anordnung sein kann, mit dem als ein hydraulisch betätigter Antrieb ausgebildeten Aktor, der in einem einfachen Fall ebenfalls als eine Kolben-Zylinder-Anordnung ausgebildet sein kann, stellt eine sehr schnelle Verlagerung des Verlängerungselements sicher, die mit der Verlagerung des dem Betätiger zugeordneten Stoßfängerabschnitts einsetzt.

Ein Vorderwagen eines Fahrzeuges umfasst eine Vorderradaufhängung mit jeweils einem Vorderrad und eine zuvor erläuterte Stoßfängeranordnung, wobei zumindest ein Stoßfängerabschnitt der Stoßfängeranordnung bei einer unfallverursachten Kraftbeaufschlagung in Richtung der Kraftbeaufschlagung verlagerbar ist und zumindest einen Betätiger der Betätigungseinrichtung derart beaufschlagt, dass der dem Betätiger zugeordnete Aktor der Betätigungseinrichtung zumindest ein Verlängerungselement aus der dem Betätiger zugeordneten Stirnseite des Stoßfängerquerträgers ausfährt, das an einem zugeordneten Vorderrad zur Anlage kommt.

Bevorzugt ist zwischen dem Stoßfängerquerträger und fahrzeugseitigen Strukturträgern mindestens ein Deformationsprofil angeordnet, das sich bei einer Kraftbeaufschlagung derart verformt, dass ein Abstand zwischen dem Stoßfängerquerträger und dem zugeordneten Strukturträger verringert wird, wobei der kolbenartige Betätiger bei dieser Verformung in einen flüssigkeitsgefüllten Zylinder verlagerbar ist, der aufgrund der aus dem Zylinder verdrängten Flüssigkeit über eine Hydraulikleitung mittels des Aktors das Verlängerungselement aus dem Stoßfängerquerträger verlagert. Bei dem Deformationsprofil kann es sich um ein so genanntes Typschadenprofil handeln, das zumindest bereichsweise als Kolben-Zylinder-Anordnung ausgebildet ist, wobei der Betätiger als Kolben dient und mit seinem freien Ende an dem zugeordneten Stoßfängerabschnitt anliegt. Um bei einer Verlagerung des Stoßfängerabschnitts Hydraulikflüssigkeit aus dem Kolben durch die Hydraulikverbindung zu dem Aktor zu verdrängen, der das zugeordnete Verlängerungselement stirnseitig aus dem Stoßfängerquerträger heraus verfährt, um den Stoßfängerquerträger zu verlängern bzw. zu verbreitern. Der Betätiger bzw. der Kolben ist aufgrund eines Sicherungs- oder Hemmelementes, beispielsweise in Form eines Schneidelementes oder Brechbolzens oder dergleichen, erst oberhalb einer bestimmten, durch das Sicherungs- oder Hemmelement vorgegebenen Losbrechkraft relativ zu dem Zylinder bewegbar.

Es versteht sich, dass die vorstehend genannten und nachstehend noch zu erläuternden Merkmale nicht nur in der jeweils angegebenen Kombination, sondern auch in anderen Kombinationen verwendbar sind. Der Rahmen der Erfindung ist nur durch die Ansprüche definiert.

Die Erfindung wird im Folgenden anhand mehrerer Ausführungsbeispiele unter Bezugnahme auf die zugehörige Zeichnung näher erläutert.

Es zeigt:
- Fig. 1: eine perspektivische Darstellung eines Vorderwagens mit einer Stoßfängeranordnung nach der Erfindung,
- Fig. 2: eine schematische Darstellung einer Draufsicht auf den Vorderwagen nach Fig. 1,
- Fig. 3: eine alternative schematische Darstellung einer Draufsicht auf den Vorderwagen nach Fig. 1,
- Fig. 4: eine perspektivische Darstellung eines Vorderwagens mit der Stoßfängeranordnung nach Fig. 1 in alternativer Ausgestaltung,

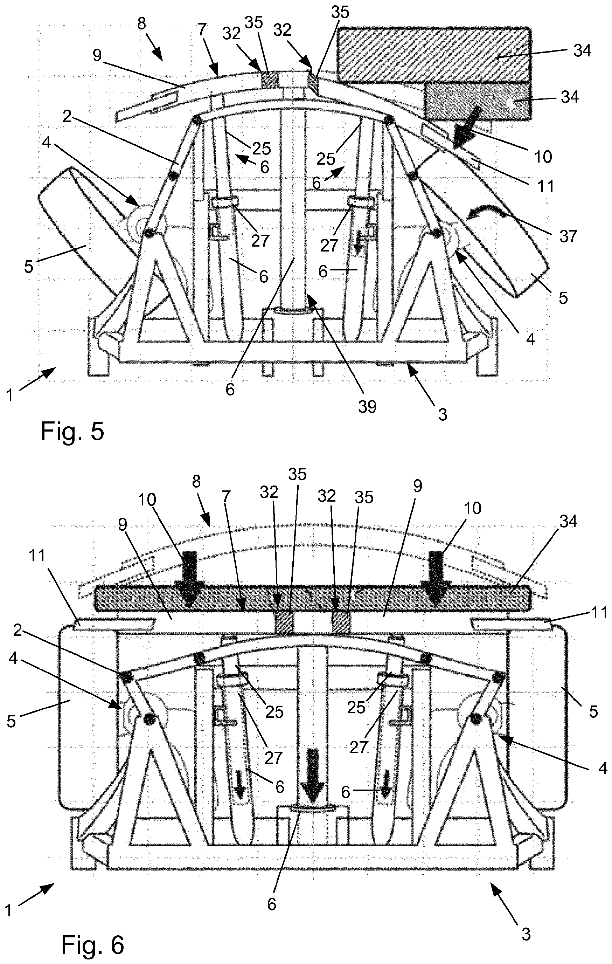

- Fig. 5: eine schematische Darstellung einer Draufsicht auf den Vorderwagen nach Fig. 4,
- Fig. 6: eine alternative schematische Darstellung einer Draufsicht auf den Vorderwagen nach Fig. 4,
- Fig. 7: eine schematische Darstellung eines Stoßfängerquerträgers mit einer zugeordneten Betätigungseinrichtung zur Verlagerung eines Verlängerungselements und
- Fig. 8: eine vergrößerte Darstellung der Einzelheit VIII nach Fig. 7.

Ein Vorderwagen 1 eines Fahrzeugs umfasst einen aus mehreren Streben 2 zusammengesetzten Rahmen und ist mit Strukturträgern 3 der Fahrzeugkarosserie verbunden. Im Bereich des Vorderwagens 1 befinden sich Vorderradaufhängungen 4 mit zugeordneten Vorderrädern 5, zwischen denen in Fahrzeuglängsrichtung ausgerichtete Deformationsprofile 6 angeordnet sind, von denen sich ein als Abstützprofil 39 dienendes Deformationsprofil 6 in etwa mittig des Fahrzeugs zwischen zwei weiteren Deformationsprofilen 6 erstreckt. Das mittlere Abstützprofil 39 muss nicht zwingend wesentlich deformierbar ausgebildet sein, sondern dient in erster Linie als Abstützung in den ersten 15 ms eines Frontalaufpralls, um den Drehpunkt eines Stoßfängerquerträgers 7 von stoßabgewandt in die Mitte zu verlagern. Die Deformationsprofile 6 sind mit einem Ende an einem sich über die Breite des Fahrzeugs bodenseitig verlaufenden Strukturträger 3 verbunden und haltern mit ihren gegenüberliegenden Enden den Stoßfängerquerträger 7 einer Stoßfängeranordnung 8, wobei der Stoßfängerquerträger 7 im Wesentlichen zwei im Querschnitt kastenförmige Stoßfängerabschnitte 9 umfasst, die gelenkig miteinander gekoppelt sind.

Um in einer Crash-Situation, also bei einer frontseitigen Kraftbeaufschlagung in Richtung des Fahrzeugs gemäß den Pfeilen 10, den Stoßfängerquerträger 7 zu verbreitern, ist in den beiden Stoßfängerabschnitten 9 jeweils außenseitig ein Verlängerungselement 11 in die Haupterstreckungsrichtung des Stoßfängerquerträgers 7 verschiebbar gelagert. In dem Bereich, in dem das Verlängerungselement 11 in dem Stoßfängerabschnitt 9 angeordnet ist, befindet sich zwischen dem Verlängerungselement 11 und dem Stoßfängerabschnitt 9 ein hülsenartiges Schiebelager 12 mit guten Gleiteigenschaften, das an einer in dem Inneren des Stoßfängerabschnitts 9 angeordneten Stirnwandung 13 eine Aufnahme 14 für einen das Verlängerungselement 11 verschiebenden Aktor 15 einer Betätigungseinrichtung 20 aufweist. Der Aktor 15 umfasst einen Hydraulikzylinder 16, in dem ein mit dem Verlängerungselement 11 verbundener Kolben 17 verschiebbar angeordnet ist. Um den Kolben 17 in seiner Geschwindigkeit vor dem Erreichen der ausgefahrenen Endlage zu dämpfen, befindet sich in dem Hydraulikzylinder 16 ein Bremselement 18, das der rohrförmige Kolben 17 mit seinem Kopfstück 19 in einer definierten Lage komprimiert bzw. deformiert. Um den Kolben 17 bereits vor dem Erreichen des Bremselementes 18 in seiner Geschwindigkeit bzw. Betätigungskraft zu reduzieren, ist in den Hydraulikzylinder 16 in etwa in der Mitte des Verschiebewegs des Kolbens 17 mindestens eine Überströmöffnung 28 eingelassen, die einen Austritt der in der Betätigungseinrichtung 20 vorhandenen Hydraulikflüssigkeit 29 ermöglicht und einen weiteren Druckanstieg verhindert.

Die Befestigung des Verlängerungselements 11 an dem Kolben 17 erfolgt mittels einer Verschraubung 36 an dem, dem Kopfstück 19 gegenüberliegenden Ende des Kolbens 17.

Um den Kolben 17 zu verlagern, ist der Hydraulikzylinder 16 des Aktors 15 mittels einer schacht-, rohr- oder schlauchförmigen Hydraulikverbindung 21 mit einer Kolben-Zylinder-Anordnung 22 verbunden, die einen in einer Aussparung des Stoßfängerabschnitts 9 einliegenden Betätiger 23 umfasst, der mit dem Kolben 24 der Kolben-Zylinder-Anordnung 22 verbunden ist, wobei die Kolben-Zylinder-Anordnung 22 als Bestandteil eines rohrförmigen Typschadenselementes 25 des Deformationsprofils 6 ausgebildet ist. Das an das Typschadenselement 25 angrenzende Deformationsprofil 6 weist eine mit Hydraulikflüssigkeit 29 gefüllte Kammer 26 eines Zylinders 40 auf. Eine Schneidringanordnung 27 oder eine Schiebeverbindung oder dergleichen verbindet das Deformationsprofil 6 insbesondere abgedichtet und mit definierter Losbrechkraft mit dem Typschadenselement 25, in dem der rohrförmige Kolben 24 gelagert ist.

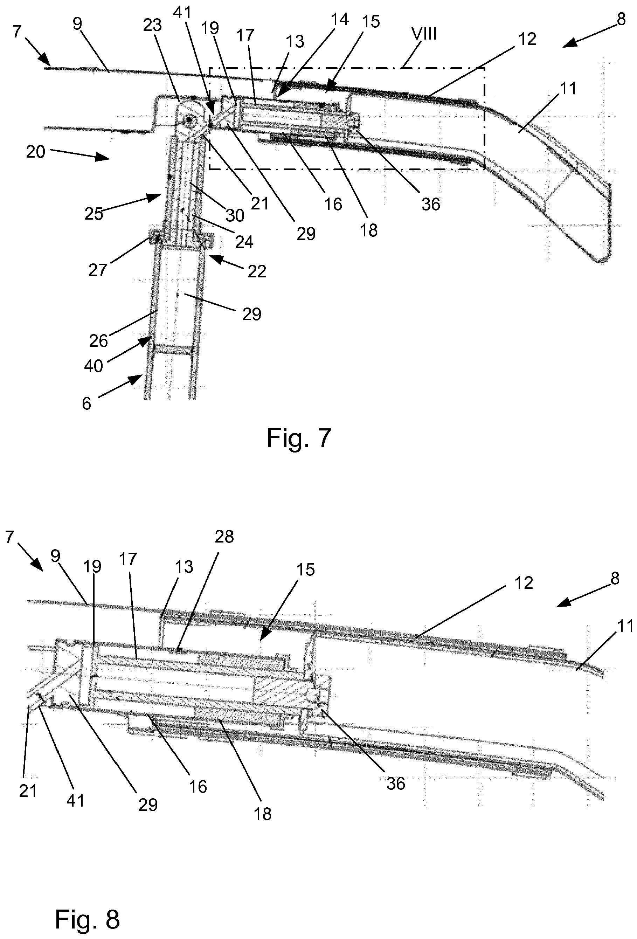

Wie den Fig.7 und 8, die eine Ausgangslage vor einer Kraftbeaufschlagung darstellen, zu entnehmen ist, wird bei einer Verlagerung des Stoßfängerabschnitts 9 der Betätiger 23 in Richtung des Strukturträgers 3 also des Fahrzeugs verlagert. Mit dieser Bewegung geht eine Verformung des Typschadenselementes 25 sowie eine Verlagerung des rohrförmigen Kolbens 24 in Richtung der mit der Hydraulikflüssigkeit 29 gefüllten Kammer 26 innerhalb des Zylinders 40 einher und die Hydraulikflüssigkeit 29 wird durch eine Bohrung 30 des Kolbens 24 und die mit der Bohrung 30 verbundene Hydraulikverbindung 21, die auch als eine Hydraulikleitung 41 ausgebildet sein kann, in den Hydraulikzylinder 16 des Aktors 15 verdrängt, wo sie den Kolben 17 in Richtung des freien stirnseitigen Endes des Stoßfängerabschnitts 9 beschleunigt. Mit dem Erreichen der Überströmöffnung 28 in dem Hydraulikzylinder 16 des Aktors 15 findet eine erste Reduzierung der Beschleunigung des Kolbens 17 des Aktors 15 statt, der im weiteren Verlauf durch das Bremselement 18 in seiner Geschwindigkeit weitergehend reduziert wird. Mit dem Beschleunigen des Kolbens 17 in Richtung des freien stirnseitigen Endes des Stoßfängerabschnitts 9 geht eine Verlagerung des Verlängerungselements 11 in Form eines teleskopartigen Ausfahrens aus dem Stoßfängerabschnitt 9 des Stoßfängerquerträgers 7 einher.

Es ist für den Fachmann ersichtlich, dass der Teleskopierweg und die Ausfahrgeschwindigkeit des Verlängerungselements 11 mit dem Weg und der Geschwindigkeit zusammenhängen mit der der Stoßfängerabschnitt 9 aus seiner Ausgangslage in Richtung des Fahrzeugs bzw. des bodenseitigen Strukturträgers 3 verlagert wird, wobei das Typschadenelement 25 und das Deformationsprofil 6 im Wesentlichen die Endlage bestimmen und insbesondere das Typschadenelement 25 eine Endlage des Stoßfängerabschnitts 9 bezüglich der Teleskopierbarkeit des Verlängerungselements 11 bestimmt.

In einer ersten Ausgestaltung umfasst die Stoßfängeranordnung 8 ein in der Mitte des Stoßfängerquerträgers 7 angeordnetes als ein kinematisches Scharniergelenk 31 ausgebildetes Gelenk 32, an das sich die Stoßfängerabschnitte 9 anschließen und das in Richtung des Vorderwagens 1 durch das mittige Deformationsprofil 6 gestützt ist. Damit die Stoßfängerabschnitte 9 nur in Richtung des Fahrzeuges schwenkbar sind, weisen die benachbarten Stoßfängerabschnitte 9 Sperrriegel 33 zur gegenseitigen Abstützung auf, wobei die Sperrriegel wie verschränkte Finger zweier Hände wirken.

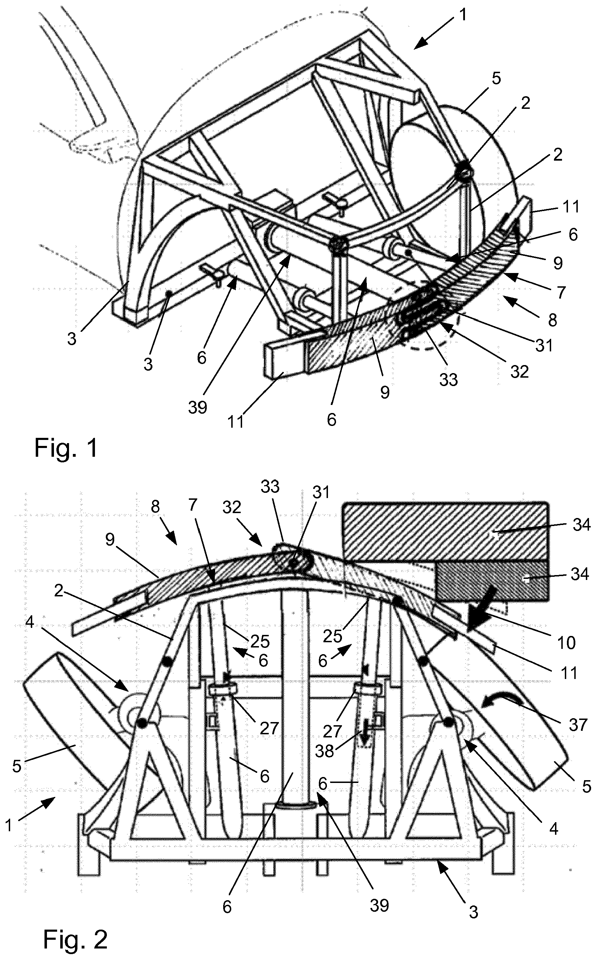

Bei einem offset-crash mit Hindernissen 34 gemäß Fig. 2, die eine 40 % und eine 25 % Überdeckung des Fahrzeugs auf der in Fahrtrichtung gesehenen rechte Seite aufweisen, bleibt der auf der linken Seite des Gelenks 32 angeordnete Stoßfängerabschnitt 9 im Wesentlichen in seiner Ausgangslage während der rechte Stoßfängerabschnitt 9 verschwenkt, so dass die beiden Stoßfängerabschnitte 9 auf der Fahrzeugseite einen stumpfen Winkel zwischen sich einschließen. Hierbei wird, wie bereits zuvor erläutert, der diesem Stoßfängerabschnitt 9 zugeordnete Betätiger 23 in Richtung des quer verlaufenden Strukturträgers 3 in Richtung des Pfeils 38 verlagert. Mit dieser Verschwenkung gehen eine entsprechende Verformung des Typschadenselements 25 und des Deformationsprofils 6 sowie eine damit verbundene Verlagerung des Verlängerungselements 11 aus dem Stoßfängerabschnitt 9 des Stoßfängerquerträgers 7 zu dessen Verlängerung einher. Das Verlängerungselement 11 gelangt in Anlage auf der Vorderseite des zugeordneten Vorderrades 5 und verschwenkt dasselbe aufgrund der Schrägstellung des Stoßfängerabschnitts 9 sowie der endseitigen Geometrie des Verlängerungselements 11 zwangsweise derart, dass sich das Vorderrad 5 mit seiner Vorderkante in Richtung des Fahrzeugs dreht und mit dem Stoßfängerabschnitt 9 sowie dem Verlängerungselement 11 eine extrem stabile Abgleitebene für die Hindernisse 34 bildet. Durch dieses Aikido-Prinzip transformiert sich der Vorderwagen 1 definiert und adaptiv zu einer je nach Exzentrizität des Aufpralls mehr oder weniger schrägen Abgleitebene unter Ausnutzung der vorhandenen (Blockbildner-) Bauteile des Vorderwagens 1. Durch die optimale Gestaltung der angreifenden Kräfte mit geringen Hebelarmen und möglichst geradliniger Wirkrichtung, ist eine Verbindung einer Leichtbauweise des Vorderwagens 1 mit den Anforderungen an das Design des Fahrzeuges bei einem gleichzeitig sehr hohen Crash-Sicherheits-Niveau in Einklang zu bringen.

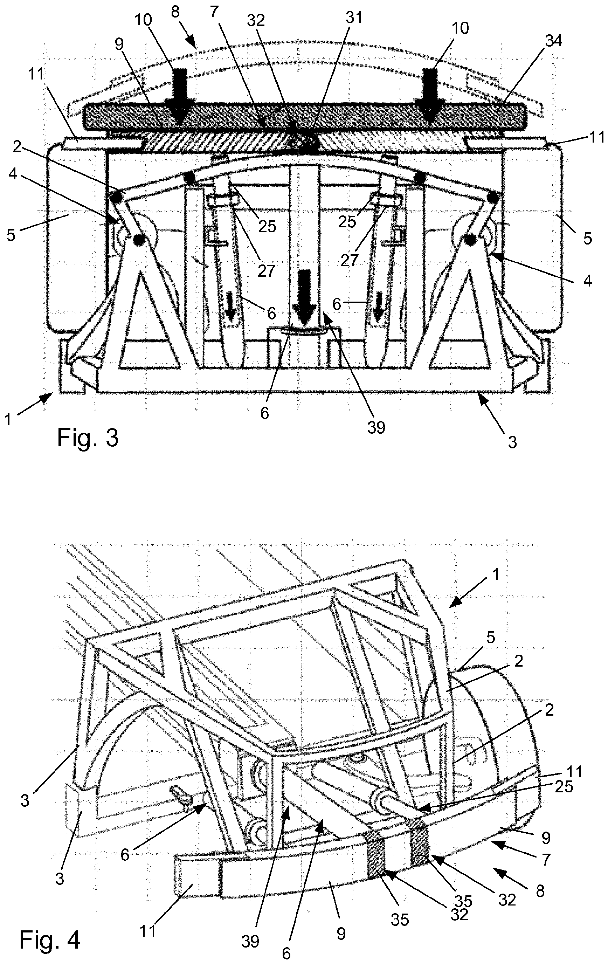

Nach Fig. 3 werden bei einer Kraftbeaufschlagung mittels des Hindernisses 34, das nach der Art eines Frontalaufpralls das Gelenk 32 und den Stoßfängerquerträger 7 in einem mittleren Bereich überdeckt, die beiden Stoßfängerabschnitte 9 derart verlagert, dass sie im Wesentlichen in Form einer Geraden in Richtung des Fahrzeugs verschoben werden. Der Begriff der Geraden ist in diesem Zusammenhang auch derart auszulegen, dass der Stoßfängerquerträger 7 im Wesentlichen seine Geometrie beibehält bzw. kein wesentliches Abwinkeln der Stoßfängerabschnitte 9 erfolgt. Hierbei werden sowohl das mittlere Deformationsprofil 6 als auch die beiden äußeren Deformationsprofile 6 verformend beansprucht und mit den Stoßfängerabschnitten 9 zugeordneten Betätigern 23 der Betätigungseinrichtung 20 derart verlagert, dass die bereits erläuterte Verdrängung der Hydraulikflüssigkeit 29 aus der Kammer 26 des Deformationsprofils 6 und dem Typschadenselement 25 in den Aktor 15 zur Verschiebung der Verlängerungselemente 11 aus den Stoßfängerabschnitten 9 erfolgt. Die beiden Verlängerungselemente 11 kommen an den umfangsseitigen Vorderseiten der Vorderräder 5 zur Anlage, wodurch eine wesentliche weitere Verlagerung des Stoßfängerquerträgers 7 aufgehalten ist, bis gegebenenfalls ein Versagen der Vorderradaufhängung 4 einsetzt, so dass eine frühzeitige, starke Einbindung der Vorderräder 5 bzw. der Vorderradaufhängungen 4 in den Crashlastpfad erfolgt.

In alternativer Ausgestaltung umfasst die Stoßfängeranordnung 8 in der Mitte des Stoßfängerquerträgers 7 zwei zueinander beabstandete Gelenke 32, die als bei einer Kraftbeaufschlagung durch mindestens ein Hindernis 34 kollabierbaren Abschnitte 35 zwischen benachbarten Stoßfängerabschnitten ausgebildet sind, wobei der Bereich des Stoßfängerquerträgers 7 zwischen den kollabierbaren Abschnitten 35 im Wesentlichen zur Befestigung des mittleren Deformationsprofils 6 und nicht zur Verschwenkung zur Verlagerung eines Betätigers dient. Die unter einer Kraftbeaufschlagung kollabierbaren Abschnitte 35 stellen elastisch/plastische Gelenke 32 dar. Das als Abschnitt 35 ausgeführte Gelenk 32 ist durch entsprechende konstruktive Maßnahmen derart gestaltet, dass eine Schwenkbewegung der damit verbundenen Stoßfängerabschnitte 9 nur in eine Richtung stattfindet, wobei die entsprechenden Abschnitte 35 aufgrund ihrer Querschnittgestaltung und Materialwahl ein gelenkiges Verhalten bei einer entsprechenden Kraftbeaufschlagung aufweisen. Ein zu verwendender Werkstoff wird beispielsweise unter dem Markennamen HSD-Stahl von der Salzgitter Flachstahl GmbH, Salzgitter, Deutschland, hergestellt und vertrieben. Ein aus einem solchen Material gefertigter Abschnitt 35 knickt oberhalb einer definierten Kraft bzw. eines definierten Biegemomentes ein und bildet lokal das elastisch/plastische Gelenk 32, um das der daran angebundene intakte äußere Stoßfängerabschnitt 9 um die gebildete Hochachse senkrecht zur Haupterstreckungsrichtung des Stoßfängerquerträgers 7 schwenken kann. Auch eine Stoßfängeranordnung 8 mit solchen als Abschnitte 35 ausgebildeten Gelenken 32 versagt unter den oben genannten Beanspruchungen und führt zu einer Teleskopierung des einen oder anderen oder beider Verlängerungselemente 11 mit den bereits geschilderten Beaufschlagungen des Vorderrades 5 auf der einen Seite des Vorderwagens 1 oder des Vorderrades 5 auf der anderen Seite des Vorderwagens oder beider Vorderräder 5 gleichzeitig.

Ist die Kraftbeaufschlagung des Stoßfängerquerträgers 7 extrem groß, ist es möglich, dass die Vorderradaufhängung 4 versagt, aber die Kräfte werden ohne eine insassengefährdende Beeinträchtigung eines sich an den Vorderwagen anschließenden Fahrgastraums abgeleitet bzw. durch Fahrwerksstrukturen kompensiert. Wobei unter einem Versagen der Vorderradaufhängung 4 nicht deren Abreißen zu verstehen ist, vielmehr wird das Vorderrad 5 z. B. bei einem exzentrischen Small Overlap gemäß dem Pfeil 37 eingedreht und nach hinten innen unter den Stoßfängerquerträger 7 gedrückt bzw. gedreht und im weiteren Verlauf wird z.B. ein Dreiecksquerlenker der nach dem Stand der Technik eingebauten Vorderradaufhängung 4, beispielsweise eines Fahrzeugs der Marke VW Polo, verbogen und gefaltet.

Bei einem Small Overlap Lastfall ist wesentlich, dass mit der Verlagerung des Stoßfängerquerträgers 7 bzw. der Stoßfängerabschnitte 9, die einer Abwinkelung in den entsprechenden Gelenken 32 bzw. den sich gelenkartig verformenden Abschnitten 35 unterliegen, ab einer bestimmten Kraftbeaufschlagung das Ausfahren des Verlängerungselements 11 auf der beaufschlagten Seite des abgewinkelten Stoßfängerabschnitts 9, darauffolgend ein nachfolgendes Eindrehen des Vorderrades 5 gemäß dem Pfeil 37 und anschließend ein Abgleiten des Hindernisses 34 erfolgt, so dass quasi vor dem Abgleiten eine Verformung oder Transformation des Vorderwagens 1 stattgefunden hat. Diese durch das Auftreffen auf das Hindernis 34 ausgelöste Verformung oder Transformation des Vorderwagens 1 erfolgt innerhalb einer Zeitspanne von ca. 10 bis 20 ms.

**Bezugszeichen**

| | | | |
|---|---|---|---|
| 1. | Vorderwagen | 22. | Kolben-Zylinder-Anordnung |
| 2. | Strebe | | |
| 3. | Strukturträger | 23. | Betätiger |
| 4. | Vorderradaufhängung | 24. | Kolben |
| 5. | Vorderrad | 25. | Typschadenselement |
| 6. | Deformationsprofil | 26. | Kammer |
| 7. | Stoßfängerquerträger | 27. | Schneidringanordnung |
| 8. | Stoßfängeranordnung | 28. | Überströmöffnung |
| 9. | Stoßfängerabschnitt | 29. | Hydraulikflüssigkeit |
| 10. | Pfeil | 30. | Bohrung von 24 |
| 11. | Verlängerungselement | 31. | Scharniergelenk |
| 12. | Schiebelager | 32. | Gelenk |
| 13. | Stirnwandung | 33. | Sperrriegel |
| 14. | Aufnahme | 34. | Hindernis |
| 15. | Aktor | 35. | Abschnitt |
| 16. | Hydraulikzylinder | 36. | Verschraubung |
| 17. | Kolben | 37. | Pfeil |
| 18. | Bremselement | 38. | Pfeil |
| 19. | Kopfstück | 39. | Abstützprofil |
| 20. | Betätigungseinrichtung | 40. | Zylinder |
| 21. | Hydraulikverbindung | 41. | Hydraulikleitung |

## Patentansprüche

1. Adaptive Stoßfängeranordnung mit einem durch mindestens ein Gelenk (32) in Stoßfängerabschnitte (9) unterteilten Stoßfängerquerträger (7), der jeweils endseitig in einer Haupterstreckungsrichtung ein mit einer zugeordneten Betätigungseinrichtung (20) teleskopierbares Verlängerungselement (11) umfasst, wobei die Betätigungseinrichtung (20) einen mittels des Stoßfängerquerträgers (7) ortsveränderlich gelagerten Betätiger (23) umfasst, der bei einer Verlagerung mit einem Aktor (15) der Betätigungseinrichtung (20) zum stirnseitigen Ausfahren des Verlängerungselements (11) zusammenwirkt.

2. Adaptive Stoßfängeranordnung nach Anspruch 1, **dadurch gekennzeichnet, dass** die Stoßfängerabschnitte (9) bei einer auf eine Vorderseite einwirkenden Kraftfbeaufschlagung derart relativ zueinander abwinkelbar sind, dass zwei benachbarte Stoßfängerabschnitte (9) rückseitig einen stumpfen Winkel zwischen sich einschließen oder eine Gerade oder einen konvexen Bogen bilden.

3. Adaptive Stoßfängeranordnung nach Anspruch 1 oder 2, **dadurch gekennzeichnet, dass** das Gelenk (32) als ein Scharniergelenk (31) oder ein bei einer Kraftbeaufschlagung kollabierbarer Abschnitt (35) zwischen zwei benachbarten Stoßfängerabschnitten (9) ausgebildet ist.

4. Adaptive Stoßfängeranordnung nach Anspruch 1, **dadurch gekennzeichnet, dass** der Betätiger (23) über Verbindungsmittel mit dem Aktor (15) gekoppelt ist, wobei das Verbindungsmittel ein derart druckfestes oder zugfestes Medium umfasst, dass mit der Verlagerung des Betätigers (23) eine Beaufschlagung des Aktors (15) einhergeht.

5. Adaptive Stoßfängeranordnung nach Anspruch 1, **dadurch gekennzeichnet, dass** der Betätiger (23) einer Kolben-Zylinder-Anordnung (22) zugeordnet ist, die Verbindungsmittel als eine flüssigkeitsgefüllte Hydraulikverbindung (21) und der Aktor (15) als ein hydraulisch betätigter Antrieb ausgebildet sind, wobei die Kolben-Zylinder-Anordnung (22) ab einer bestimmten Kraft derart auslöst, dass der Kolben (24) relativ zu dem Zylinder verschiebbar ist.

6. Adaptive Stoßfängeranordnung nach Anspruch 5, **dadurch gekennzeichnet, dass** die Kolben-Zylinder-Anordnung (22) in ein Deformationselement (6) integriert ist, die zwischen dem Stoßfängerquerträger (7) und fahrzeugseitigen Strukturträgern (3) anordenbar ist.

7. Vorderwagen eines Fahrzeuges mit einer Vorderradaufhängung (4) mit jeweils einem Vorderrad (5) und mit einer Stoßfängeranordnung (8) nach einem der Ansprüche 1 bis 6, wobei zumindest ein Stoßfängerabschnitt (9) der Stoßfängeranordnung (8) bei einer unfallverursachten Kraftbeaufschlagung in Richtung der Kraftbeaufschlagung verlagerbar ist und zumindest einen Betätiger (23) der Betätigungseinrichtung (20) derart beaufschlagt, dass der dem Betätiger (23) zugeordnete Aktor (15) der Betätigungseinrichtung (20) zumindest ein Verlängerungselement (11) aus der dem Betätiger (23) zugeordneten Stirnseite des Stoßfängerquerträgers (7) ausfährt, das an einem zugeordneten Vorderrad (5) zur Anlage kommt.

8. Vorderwagen nach Anspruch 7, **dadurch gekennzeichnet, dass** zwischen dem Stoßfängerquerträger (7) und fahrzeugseitigen Strukturträgern (3) mindestens ein Deformationsprofil (6) angeordnet ist, das sich bei einer Kraftbeaufschlagung derart verformt, dass ein Abstand zwischen dem Stoßfängerquerträger (7) und dem zugeordneten Strukturträger (3) verringert wird, wobei der kolbenartige Betätiger (23) bei dieser Verformung in einen flüssigkeitsgefüllten Zylinder (40) verlagerbar ist, der aufgrund der aus dem Zylinder (40) verdrängten Flüssigkeit über eine Hydraulikleitung (41) mittels des Aktors (15) das Verlängerungselement (11) aus dem Stoßfängerquerträger (7) verlagert.

9. Vorderwagen nach Anspruch 7 oder 8, **dadurch gekennzeichnet, dass** eine mittige Kraftbeaufschlagung des Stoßfängerquerträgers (7) eine Verschwenkung der Stoßfängerabschnitte (9) innerhalb der vorgesehenen Gelenke (32) derart bewirkt, dass die Stoßfängerabschnitte (9) eine Gerade einnehmen oder eine mittige Kraftbeaufschlagung unter einer Beibehaltung der Geometrie des Stoßfängerquerträgers (7) erfolgt und die Stoßfängerabschnitte (9) zur Beaufschlagung mehrerer Betätiger (23) in Richtung der Kraftbeaufschlagung verlagerbar sind, wobei beidseitig Verlängerungselemente (11) aus den Stirnseiten des Stoßfängerprofils (7) ausfahrbar sind und der Stoßfängerquerträger (7) derart in Richtung der Strukturträger (3) verlagerbar ist, dass die Verlängerungselemente (11) auf einer Vorderseite der Vorderräder (5) zur Auflage kommen.

10. Vorderwagen nach Anspruch 7 oder 8, **dadurch gekennzeichnet, dass** eine außermittige Kraftbeaufschlagung des Stoßfängerquerträgers (7) eine Verschwenkung der Stoßfängerabschnitte (9) innerhalb der vorgesehenen Gelenke (32) derart bewirkt, dass die Stoßfängerabschnitte (9) stumpfwinklig zueinander ausgerichtet sind und zur Beaufschlagung mindestens eines Betätigers (23) in Richtung der Kraftbeaufschlagung verlagerbar sind, wobei das Verlängerungselement (11) auf der dem Betätiger (23) zugewandten Stirnseite des Stoßfängerquerträgers (7) ausfahrbar ist, bei einer Verlagerung des Stoßfängerquerträgers (7) in Richtung der Strukturträger (3) das zugeordnete Vorderrad (5) durch eine Beaufschlagung der äußeren Vorderkante des Vorderrades (5) derart schräg stellt, dass es in Folge der Schrägstellung zusammen mit dem Vorderrad (5) eine querkraft-stabile Abgleitebene mit dem Verlängerungselement (11) bildet.

## Claims

1. Adaptive bumper arrangement having a bumper crossmember (7) which is divided into bumper sections (9) by way of at least one joint (32) and comprises, in each case on the end side in a main extent direction, an extension element (11) which can be telescoped by way of an associated actuating device (20), the actuating device (20) comprising an actuating means (23) which is mounted with a variable location by means of the bumper crossmember (7) and, in the case of a movement, interacts with an actuator (15) of the actuating device (20) in order to extend the extension element (11) on the end side.

2. Adaptive bumper arrangement according to Claim 1, **characterized in that**, in the case of force loading which acts on a front side, the bumper sections (9) can be angled away relative to one another in such a way that, on the rear side, two adjacent bumper sections (9) enclose an obtuse angle between them or form a straight line or a convex arc.

3. Adaptive bumper arrangement according to Claim 1 or 2, **characterized in that** the joint (32) is configured as a hinged joint (31) or a section (35) between two adjacent bumper sections (9), which section (35) can collapse in the case of loading with force.

4. Adaptive bumper arrangement according to Claim 1, **characterized in that** the actuating means (23) is coupled to the actuator (15) via connecting means, the connecting means comprising a medium which has such compressive or tensile strength that loading of the actuator (15) accompanies the movement of the actuating means (23).

5. Adaptive bumper arrangement according to Claim 1, **characterized in that** the actuating means (23) is assigned to a piston/cylinder arrangement (22), the connecting means are configured as a liquid-filled hydraulic connection (21), and the actuator (15) is configured as a hydraulically actuated drive, the piston/cylinder arrangement (22) triggering above a defined force in such a way that the piston (24) can be displaced relative to the cylinder.

6. Adaptive bumper arrangement according to Claim 5, **characterized in that** the piston/cylinder arrangement (22) is integrated into a deformation element (6), which piston/cylinder arrangement (22) can be arranged between the bumper crossmember (7) and vehicle-side support structures (3).

7. Front part of a vehicle having a front wheel suspension system (4) with in each case one front wheel (5) and having a bumper arrangement (8) according to one of Claims 1 to 6, it being possible, in the case of force loading which is caused by an accident, for at least one bumper section (9) of the bumper arrangement (8) to be moved in the direction of the force loading, and the said bumper section (9) loading at least one actuating means (23) of the actuating device (20) in such a way that that actuator (15) of the actuating device (20) which is assigned to the actuating means (23) extends at least one extension element (11) out of that end side of the bumper crossmember (7) which is assigned to the actuating means (23), which extension element (11) comes into contact with an associated front wheel (5).

8. Front part according to Claim 7, **characterized in that** at least one deformation profile (6) is arranged between the bumper crossmember (7) and vehicle-side support structures (3), which at least one deformation profile (6), in the case of force loading, is deformed in such a way that a spacing between the bumper crossmember (7) and the associated support structure (3) is reduced, it being possible, in the case of the said deformation, for the piston-like actuating means (23) to be moved into a liquid-filled cylinder (40) which, on account of the liquid which is displaced out of the cylinder (40), moves the extension element (11) out of the bumper crossmember (7) via a hydraulic line (41) by means of the actuator (15).

9. Front part according to Claim 7 or 8, **characterized in that** central force loading of the bumper crossmember (7) brings about pivoting of the bumper sections (9) within the provided joints (32) in such a way that the bumper sections (9) take up a straight line, or central force loading takes place with retention of the geometry of the bumper crossmember (7), and the bumper sections (9) can be moved in order to load a plurality of actuating means (23) in the direction of the force loading, it being possible for extension elements (11) to be extended on both sides out of the end sides of the bumper profile (7), and it being possible for the bumper crossmember (7) to be moved in the direction of the support structures (3) in such a way that the extension elements (11) come into contact on a front side of the front wheels (5).

10. Front part according to Claim 7 or 8, **characterized in that** eccentric force loading of the bumper crossmember (7) brings about pivoting of the bumper sections (9) within the provided joints (32) in such a way that the bumper sections (9) are oriented at an obtuse angle with respect to one another and can be moved in order to load at least one actuating means (23) in the direction of the force loading, it being possible for the extension element (11) to be extended on that end side of the bumper crossmember (7) which faces the actuating means (23), the associated front wheel (5) tilting by way of loading of the outer front edge of the front wheel (5) in the case of a movement of the bumper crossmember (7) in the direction of the support structures (3), in such a way that, as a result of the tilting, it forms, together with the front wheel (5), a slipping plane with the extension element (11), which slipping plane is stable with respect to transverse forces.

## Revendications

1. Système de pare-chocs adaptatif avec une traverse de pare-chocs (7) divisée par au moins une articulation (32) en parties de pare-chocs (9), et qui comprend respectivement en extrémité dans une direction d'extension principale un élément de prolongement télescopique (11) avec un dispositif d'actionnement associé (20), dans lequel le dispositif d'actionnement (20) comprend un actionneur (23) supporté en un endroit variable au moyen de la traverse de pare-chocs (7), qui lors d'un déplacement coopère avec un actionneur (15) du dispositif d'actionnement (20) pour la sortie frontale de l'élément de prolongement (11).

2. Système de pare-chocs adaptatif selon la revendication 1, **caractérisé en ce que** les parties de pare-chocs (9) peuvent se plier l'une par rapport à l'autre sous l'effet d'une force agissant sur un côté avant, de telle manière que deux parties de pare-chocs voisines (9) forment vers l'arrière entre elles un angle obtus ou forment une droite ou un arc convexe.

3. Système de pare-chocs adaptatif selon la revendication 1 ou 2, **caractérisé en ce que** l'articulation (32) est formée par une articulation à charnière (31) ou une partie (35) entre deux parties de pare-chocs voisines (9), pouvant être écrasée sous l'effet d'une force.

4. Système de pare-chocs adaptatif selon la revendication 1, **caractérisé en ce que** l'actionneur (23) est couplé à l'actionneur (15) par un moyen de liaison, dans lequel le moyen de liaison comprend un milieu résistant à la compression ou résistant à la traction, de telle manière que le déplacement de l'actionneur (23) entraîne une action sur l'actionneur (15).

5. Système de pare-chocs adaptatif selon la revendication 1, **caractérisé en ce que** l'actionneur (23) est associé à un système piston-cylindre (22), les moyens de liaison sont formés par une liaison hydraulique remplie de liquide (21) et l'actionneur (15) est formé par un entraînement actionné de façon hydraulique, dans lequel le système piston-cylindre (22) se déclenche à partir d'une force déterminée, de telle manière que le piston (24) soit déplaçable par rapport au cylindre.

6. Système de pare-chocs adaptatif selon la revendication 5, **caractérisé en ce que** le système piston-cylindre (22) est intégré dans un élément de déformation (6), qui peut être disposé entre la traverse de pare-chocs (7) et des supports structurels (3) du véhicule.

7. Partie avant d'un véhicule avec une suspension de roues avant (4) avec chaque fois une roue avant (5) et avec un système de pare-chocs (8) selon l'une quelconque des revendications 1 à 6, dans laquelle au moins une partie de pare-chocs (9) du système de pare-chocs (8) est déplaçable dans la direction de l'action de la force dans le cas d'une force appliquée à la suite d'un accident et agit sur au moins un actionneur (23) du dispositif d'actionnement (20) de telle manière que l'actionneur (15) du dispositif d'actionnement (20) associé à l'actionneur (23) repousse au moins un élément de prolongement (11) hors du côté frontal de la traverse de pare-chocs (7) associé à l'actionneur (23), lequel vient s'appliquer sur une roue avant associée (5) .

8. Partie avant selon la revendication 7, **caractérisée en ce qu'**au moins un profilé de déformation (6) est disposé entre la traverse de pare-chocs (7) et des supports structurels du véhicule (3), lequel se déforme lors de l'action d'une force, de telle manière qu'une distance entre la traverse de pare-chocs (7) et le support structurel associé (3) soit réduite, dans laquelle l'actionneur en forme de piston (23) est déplaçable lors de cette déformation dans un cylindre (40) rempli de liquide, qui à cause du liquide refoulé hors du cylindre (40) par une conduite hydraulique (41) déplace l'élément de prolongement (11) hors de la traverse de pare-chocs (7) au moyen de l'actionneur (15).

9. Partie avant selon la revendication 7 ou 8, **caractérisée en ce qu'**une application de force centrale sur la traverse de pare-chocs (7) provoque un pivotement des parties de pare-chocs (9) à l'intérieur de l'articulation prévue (32), de telle manière que les parties de pare-chocs (9) forment une droite ou qu'il se produise une application de force centrale avec conservation de la géométrie de la traverse de pare-chocs (7) et que les parties de pare-chocs (9) soient déplaçables dans la direction de l'application de la force pour agir sur plusieurs actionneurs (23), dans laquelle des éléments de prolongement (11) peuvent sortir de part et d'autre hors des côtés frontaux du profilé de pare-chocs (7) et la traverse de pare-chocs (7) est déplaçable en direction des supports structurels (3) de telle manière que les éléments de prolongement (11) viennent s'appliquer sur un côté avant des roues avant (5).

10. Partie avant selon la revendication 7 ou 8, **caractérisée en ce qu'**une application de force décentrée à la traverse de pare-chocs (7) provoque un pivotement des parties de pare-chocs (9) à l'intérieur de l'articulation prévue (32), de telle manière que les parties de pare-chocs (9) soient orientées sous un angle obtus l'une par rapport à l'autre et soient déplaçables dans la direction de l'application de la force afin d'agir sur au moins un actionneur (23), dans laquelle l'élément de prolongement (11) peut sortir sur le côté frontal de la traverse de pare-chocs (7) tourné vers l'actionneur (23), lors d'un déplacement de la traverse de pare-chocs (7) en direction des supports structurels (3) la roue avant associée (5) se place en oblique par une action sur le bord avant extérieur de la roue avant (5), de telle manière qu'elle forme, par suite de la position oblique, avec la roue avant (5) un plan de glissement stable par rapport à une force transversale avec l'élément de prolongement (11).
